(19) Europäisches Patentamt
European Patent Office
Office européen des brevets

(11) **EP 4 610 308 A1**

(12) **EUROPEAN PATENT APPLICATION**
published in accordance with Art. 153(4) EPC

(43) Date of publication:
**03.09.2025 Bulletin 2025/36**

(21) Application number: 23883100.2

(22) Date of filing: 25.10.2023

(51) International Patent Classification (IPC):
$C08L\ 25/12^{(2006.01)}$    $C08L\ 51/04^{(2006.01)}$
$C08L\ 25/08^{(2006.01)}$    $C08L\ 33/06^{(2006.01)}$
$C08L\ 55/02^{(2006.01)}$

(52) Cooperative Patent Classification (CPC):
C08L 25/08; C08L 25/12; C08L 33/06; C08L 51/04;
C08L 55/02

(86) International application number:
**PCT/KR2023/016674**

(87) International publication number:
**WO 2024/090995 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 25.10.2022 KR 20220138522
26.10.2022 KR 20220139506

(71) Applicant: **LG CHEM, LTD.**
**Seoul 07336 (KR)**

(72) Inventors:
• **HAN, Hye Soo**
**Daejeon 34122 (KR)**

• **HEO, Jae Won**
**Daejeon 34122 (KR)**
• **KIM, Yoo Vin**
**Daejeon 34122 (KR)**
• **JEON, Hee Jung**
**Daejeon 34122 (KR)**
• **KIM, Chang Hoe**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **THERMOPLASTIC RESIN COMPOSITION**

(57) The present invention relates to a thermoplastic resin composition and the resin composition includes an aromatic vinyl-vinyl cyanide-acrylic cross-linked copolymer, wherein a 60° gloss measured according to ASTM D523 using a gloss meter is 25 or less, an impact strength of a 1/4-inch-thick sample measured according to ASTM D256 is 15 kgf·cm/cm or more, and a light reflection coefficient of variation calculated by Equation 1 below is 1.5 or less, and it is possible to achieve a matte property even through injection molding.

[Equation 1]

$$C_{LR} = D_L/M_L$$

$C_{LR}$ is a light reflection coefficient of variation, $D_L$ is a standard deviation of luminous intensity, and $M_L$ is an average luminous intensity.

**Description**

**[Technical Field]**

Cross-Reference to Related Application

This application claims priority to and the benefit of Korean Patent Application No. 2022-0139506, filed on October 26, 2022, and Korean Patent Application No. 2022-0138522, filed on October 25, 2022, the entire contents of which are incorporated herein by reference.

Technical Field

The present invention relates to a thermoplastic resin composition capable of achieving a matte property.

**[Background Art]**

In general, acrylonitrile-butadiene-styrene (hereinafter referred to as ABS) resin has excellent impact resistance and excellent processability, so the ABS resin is widely used for various purposes such as automobiles, electrical and electronic products, office supplies, home appliances, toys, and stationery. However, due to the susceptibility of the ABS resin to be easily oxidized by oxygen, ultraviolet rays, light, and heat because of the double bond of butadiene rubber used as an impact modifier, which results in discoloration and a reduction in appearance characteristics, the ABS resin has limitations in use as an exterior material, and even when used as an interior material, the ABS resin does not satisfy customer requirements due to its discoloration.

With the recent trend towards high-end home appliances and automobile interior materials, interest has been focused on sensitive resins that can express a low-gloss and soft texture without painting instead of cold, artificially glossy materials. In line with the trend towards high-end home appliances and automobile interior materials, the automobile industry is excluding coating and painting processes and using low-gloss resins due to indoor air quality regulations and environmental issues.

A method used to prepare low-gloss resins is to create a low-gloss effect through diffuse reflection that scatters incident light by greatly adjusting the smoothness of the resin surface. Specifically, a method of preparing large rubber particles with an average particle diameter of 1 μm or more can be used, and although a resin prepared in this way can have a reduced gloss deviation on the entire surface of the molded product, the low-gloss effect is insufficient, and heat resistance and impact strength are reduced.

Another method is to create a low-gloss effect on the surface of the injection product by embossing the mold to make an uneven surface of the molded product. However, a product prepared in this way has an excellent low-gloss effect, but separate molds are required for each product shape, and the gloss is partially increased due to the uneven glossiness of the resin itself. As the size of molded products to which a low-gloss resin is applied becomes larger, gloss deviation in which high gloss is expressed unevenly during molding is occurring. To solve such problems, mold analysis is used to adjust injection molding conditions and mold gate locations, but there are limitations.

Still another method is to prepare a low-gloss resin by graft polymerization of a monomer such as an ethylene-unsaturated carboxylic acid onto a resin. Although this method provides a resin with overall good physical properties, heat resistance is rapidly reduced.

U.S. Patent Registration No. 4,460,742 (Patent Document 1) discloses a low-gloss resin composition using a cross-linked copolymer. This exhibits a low-gloss effect by adding rubber particles with a large diameter or a matting agent. However, an excess amount of matting agent is required, resulting in a reduction in impact strength and heat resistance.

Therefore, there is a need to develop a new low-gloss thermoplastic material which has excellent weather resistance, heat resistance, and low-gloss characteristics while uniformly exhibiting low-gloss characteristics on the entire surface of molded product.

[Related Art Documents]

[Patent Documents]

(Patent Document 1) U.S. Patent Registration No. 4,460,742

**[Disclosure]**

**[Technical Problem]**

The present invention is directed to providing a cross-linked copolymer with a controlled cross-linking degree and glass transition temperature by adjusting the reactivity among monomers and the reactivity between a chain and a cross-linking agent during polymerization by adding the cross-linking agent and the like in a divided manner.

In addition, the present invention is directed to providing a matte thermoplastic resin composition with a smooth surface, which maintains excellent heat resistance and impact strength and may have process advantages due to good flowability, by including the copolymer.

**[Technical Solution]**

In order to solve the above-mentioned problems, the present invention provides a resin composition including an aromatic vinyl-vinyl cyanide-acrylic cross-linked copolymer, wherein a 60° gloss measured according to ASTM D523 using a gloss meter is 25 or less, an impact strength of a 1/4-inch-thick sample measured according to ASTM D256 is 15 kgf·cm/cm or more, and a light reflection coefficient of variation calculated by Equation 1 below is 1.5 or less.

$$[Equation\ 1]$$

$$C_{LR} = D_L/M_L$$

In Equation 1, $C_{LR}$ is a light reflection coefficient of variation, $D_L$ is a standard deviation of luminous intensity, and $M_L$ is an average luminous intensity.

**[Advantageous Effects]**

A resin composition according to the present invention has a low gloss and can have a matte property and a smooth surface by adjusting the light reflection coefficient of variation to a low level and have process advantages due to excellent flowability without a reduction in heat resistance and impact strength.

**[Modes of the Invention]**

Hereinafter, the present invention will be described in further detail to help in understanding the present invention.

Terms and words in this specification and claims should not be construed as limited to their conventional or dictionary meanings but should be construed as a meaning and concept consistent with the technical idea of the present invention based on the principle that the inventors can properly define the concept of terms in order to describe their invention in the best way.

Terms and measurement methods used in the present invention may be defined as follows, unless otherwise defined.

The term "composition" used in the present invention includes not only reaction products and decomposition products formed from the material of the composition, but also mixtures of materials including the composition.

The term "monomer unit," "cross-linking unit," or "cross-linking part" used in the present invention may refer to a repeating unit, which is formed when a compound used as a monomer or a compound used as a cross-linking agent participates in a polymerization or crosslinking reaction, a structure derived therefrom, or the substance itself.

The term "derivative" used in the present invention may refer to a compound having a structure in which one or more of the hydrogen atoms constituting the original compound are substituted with a halogen group, an alkyl group, or a hydroxy group.

In the present invention, "polymerization conversion rate" refers to the degree to which monomers are polymerized to form a polymer through a polymerization reaction. After collecting a portion of the polymer in the reactor during polymerization, the weight of the polymer excluding moisture is calculated through Equation 3 below, and then the sample is dissolved in a tetrahydrofuran (THF) solvent and precipitated with methanol (MeOH) to remove unreacted monomers, and the precipitated suspended solid is dried to measure the weight of the polymer, and the polymerization conversion rate is calculated using the following Equation 4.

(Actual weight of polymer) = (Weight of collected polymer) - (Weight of collected polymer X moisture content)                    [Equation 3]

Polymerization conversion rate (%) = [(Weight of polymer obtained by drying) / (Actual weight of polymer)] X 100 [Equation 4]

## Thermoplastic resin composition

A resin composition according to the present invention includes an aromatic vinyl-vinyl cyanide-acrylic cross-linked copolymer, wherein a 60° gloss measured according to ASTM D523 using a gloss meter is 25 or less, an impact strength of a 1/4-inch-thick sample measured according to ASTM D256 is 15 kgf·cm/cm or more, and a light reflection coefficient of variation calculated by Equation 1 below is 1.5 or less.

$$[\text{Equation 1}]$$

$$C_{LR} = D_L/M_L$$

In Equation 1, $C_{LR}$ is a light reflection coefficient of variation, $D_L$ is a standard deviation of luminous intensity, and $M_L$ is an average luminous intensity.

According to an embodiment of the present invention, the resin composition has a gloss of 25 or less, and the gloss may be preferably 20 or less, more preferably 17 or less, still more preferably 15 or less. The gloss is a representative value that may express glossiness (high-gloss and low-gloss) or mattness, and most commercially available matte molded products have a gloss of around 30, which in fact cannot be considered as being matte, but when the resin composition of the present invention is used, a gloss at a very low level of 25 or less may be achieved, making it possible to achieve a matte product.

Existing matte products are generally produced by injecting a resin after roughening a surface of the injection mold with corrosion treatment to make the surface have a characteristic of being diffusely reflective. However, it is difficult to achieve a matte property through this method, and this method is not suitable for mass production because processability decreases as the injection mold wears out.

On the other hand, some molded products achieve a matte property through post treatment of a low-gloss product. For example, a pattern on the surface is formed by applying a coextruded film including a cross-linked product or by applying a cross-linked product to a product and then performing UV curing. However, this method has limitations in achieving gloss and results in a less smooth surface.

A resin composition according to an embodiment of the present invention has the same gloss as described above and a light reflection coefficient of variation of 1.5 or less, and thus it is possible to provide a matte molded product with a smooth surface. The light reflection coefficient of variation may be 1.5 or less, preferably 1.4 or less, more preferably 1.3 or less, still more preferably 1.2 or less.

The light reflection coefficient of variation reflects not only the smoothness of the molded product surface but also the gloss, which indicates a matte and smooth surface, that is, diffuse reflection occurs equally anywhere on the surface, and thus a high-quality matte molded product may be provided. In other words, a light reflection coefficient of variation that is greater than 1.5 indicates that the surface is not smooth, and diffuse reflection does not occur on any part of the surface.

The light reflection coefficient of variation may be derived using Phyton in the following way.

1) Sample imaging: Using a DSLR camera (Canon 750D) and a 200 mm x 200 mm white LED (Collimated Backlight LTS-3PFT), a prepared sample is photographed and imaged when a distance between the camera and the sample is set to 40 cm, and a distance between the sample and the light is set to 100 cm, and an angle is 90°.

2) Grayscale conversion of sample image: The sample image is converted to grayscale (0 to 255) using the OpenCV library. A grayscale value is assigned to each pixel in the sample image, and the grayscale value is used as luminous intensity.

3) Reconstruction of the image: The image is reconstructed by dividing the image into grids of 200 $\mu$m x 200 $\mu$m and averaging luminous intensity values (grayscale values) of the pixels in each grid. Each grid has one averaged luminous intensity value.

4) Luminous intensity correction: The target grid is set as Zone 1, the 8 grids adjacent to Zone 1 are set as Zone 2, and the 16 grids adjacent to Zone 2 are set as Zone 3, and after assigning 1, -0.0625, and -0.03125 to Zone 1, Zone 2, and Zone 3, respectively, as a correction factor, the corrected luminous intensity value of the target grid is derived using Equation 2 below.

[Equation 2]

$$L = 2L^1 + \sum_{k=1}^{8}(-0.0625\,L_k^2) + \sum_{m=1}^{16}(-0.03125L_m^3)$$

In Equation 2, L is the luminous intensity value of the target grid, $L^1$ is the luminous intensity of the grid in Zone 1, $L^2_1$, $L^2_2$, $L^2_3$, ..., $L^2_8$ are the respective luminous intensities of the 8 grids in Zone 2, and $L^3_1$, $L^3_2$, $L^3_3$, ..., $L^3_{16}$ are the respective luminous intensities of the16 grids in Zone 3.

The correction factor is intended to readjust the luminous intensity in consideration of the visual suppression effect and may minimize errors caused by optical illusions in which the luminous intensity of the target grid may be evaluated differently by the luminous intensity of surrounding grids when observed by the naked eye. Specifically, in terms of the "mattness" of products, it is more important to be judged as being matte by human visual perception, so not only the value measured using a device needs to indicate mattness, but also it needs to be judged as being matte by visual perception, and therefore, the correction factor may be applied to the measured value so that the measured value derived using the device is equivalent to the actual visual effect after considering optical illusions.

5) Average value and standard deviation: After obtaining the average and standard deviation from the corrected luminous intensity values of each grid, the light reflection coefficient of variation is derived by substituting the average value and standard deviation of the luminous intensity into Equation 1.

According to an embodiment of the present invention, the resin composition may have an impact strength of 15 kgf·cm/cm or more, which is measured for a 1/4-inch-thick sample according to ASTM D256, and as a specific example, the impact strength may be 15.5 kgf-cm/cm or more, 16 kgf·cm/cm or more, 16.5 kgf-cm/cm or more, or 17 kgf·cm/cm or more.

According to an embodiment of the present invention, the resin composition has a low gloss and a low light reflection coefficient of variation, so it is possible to provide a matte molded product with a smooth surface, and impact strength may be improved. These properties may be achieved by including an aromatic vinyl-vinyl cyanide-acrylic cross-linked copolymer, which may solve problems that existing matte molded products have.

(1) Aromatic vinyl-vinyl cyanide-acrylic cross-linked copolymer and preparation method thereof

According to an embodiment of the present invention, the aromatic vinyl-vinyl cyanide-acrylic cross-linked copolymer includes: a cross-linking part including a cross-linking functional compound unit; an aromatic vinyl-based monomer unit; a vinyl cyanide-based monomer unit; and a first alkyl (meth)acrylate-based monomer unit, wherein a glass transition temperature may be less than 90 °C, and a cross-linking degree may be 40% to 70%.

The resin composition includes an aromatic vinyl-vinyl cyanide-acrylic cross-linked copolymer, and the aromatic vinyl-vinyl cyanide-acrylic cross-linked copolymer may be included in an amount of 1 part by weight to 30 parts by weight, preferably 3 parts by weight to 20 parts by weight, based on 100 parts by weight of the resin composition.

The cross-linked copolymer provides the resin composition with surface characteristics so that light may be diffusely reflected from the surface, and the copolymer may be prepared in a form with higher strength due to cross-linking and uniformly distributed in the matrix resin. When the cross-linked copolymer is included in the resin composition, impact strength may be improved to an excellent level while the gloss and the light reflection coefficient of variation may be very low. When the cross-linked copolymer is included in the above range, the above effects may be achieved much easier.

According to an embodiment of the present invention, the cross-linked copolymer may have a glass transition temperature of less than 90 °C, preferably 88 °C or less, more preferably 87 °C or less. In addition, the cross-linked copolymer may have a cross-linking degree of 40% to 70%, preferably 45% to 65%.

In general, the glass transition temperature may be affected by the proportion of monomers in the copolymer and a cross-linking degree by a cross-linking agent, and when the glass transition temperature is high, the impact strength is reduced. Meanwhile, in order to maintain a uniform state with extremely low surface gloss of the molded product, a cross-linked copolymer should be applied to induce diffuse reflection on the surface of the molded product, but cross-linked copolymers generally have a high glass transition temperature, which reduces impact strength.

However, according to an embodiment of the present invention, by adjusting the method of adding polymerization additives such as a cross-linking agent and a molecular weight regulator, it is possible to provide a cross-linked copolymer that has a low glass transition temperature and achieves the same cross-linking degree as that of existing cross-linked copolymers, and thus it is possible to provide a molded product with a matte and smooth surface and excellent impact strength.

Considering that the impact strength may be poor when the glass transition temperature is 90 °C or more, and when the cross-linking degree is 40% or less or the cross-linking degree is 70% or more, the gloss may be increased and the surface smoothness may be reduced due to a decrease in dispersibility, the cross-linked copolymer may have a glass transition temperature of 90 °C or more and a cross-linking degree of 40% to 70%.

According to an embodiment of the present invention, the cross-linking part may include a cross-linking functional compound unit, and the cross-linking functional compound may include one or more selected from the group consisting of a silicone-based compound, an acrylic-based compound, and a vinyl-based compound, and the cross-linking part may be composed of units derived from these compounds.

The cross-linked copolymer according to an embodiment of the present invention may have cross-linking parts that are uniformly distributed in the copolymer, and the degree to which the cross-linking parts are distributed is appropriate so that fluidity among the entire chain may be maintained.

According to an embodiment of the present invention, the cross-linked copolymer may include 40 parts by weight to 65 parts by weight of the aromatic vinyl-based monomer unit; 15 parts by weight to 35 parts by weight of the vinyl cyanide-based monomer unit: 5 parts by weight to 35 parts by weight of the first alkyl (meth)acrylate-based monomer unit; and 0.05 parts by weight to 5.00 parts by weight of the cross-linking part, based on 100 parts by weight of the total copolymer. Within the above range, a desired level of glass transition temperature and an adequate level of cross-linking degree may be achieved, and thus it is possible to achieve an excellent impact strength and a matte property.

The cross-linked copolymer may be a random copolymer and have a uniform composition of aromatic vinyl-based monomer units and vinyl cyanide-based monomer units. Uniform composition of the monomer units may mean that the proportion of each monomer unit present in the growing polymer, which is polymerized by the polymerization reaction, remains constant. In a specific example, while polymerization progresses, that is, over the polymerization time, whenever a portion of the polymer in the reactor is collected as a sample, the proportion of each monomer unit forming the polymer remains constant.

According to an embodiment of the present invention, the aromatic vinyl-based monomer unit and vinyl cyanide-based monomer unit may be a repeating unit formed by each monomer participating in the polymerization reaction. As a specific example, the polymerization reaction may be a radical polymerization reaction, and thus the repeating unit may be derived from carbon-carbon double bonds present in each aromatic vinyl-based monomer and vinyl cyanide-based monomer.

According to an embodiment of the present invention, the cross-linked copolymer may further include a vinyl ester-based monomer unit or a second alkyl (meth)acrylate-based monomer unit. The cross-linked copolymer is a terpolymer and may be preferably a quaternary copolymer. In the case of a quaternary copolymer, adjusting the glass transition temperature by controlling the monomer content or the functional group content in the copolymer may be much easier compared to a terpolymer.

According to an embodiment of the present invention, a method of preparing the aromatic vinyl-vinyl cyanide-acrylic cross-linked copolymer includes: initiating polymerization by adding a first reaction solution including an aromatic vinyl-based monomer, a vinyl cyanide-based monomer, and an acrylic-based monomer to a reactor (S1); and performing polymerization while adding a second reaction solution including a cross-linking functional compound to the reactor (S2), wherein the second reaction solution may be added two or more times in a divided manner.

Step (S1) is a step of initiating polymerization, which may include adding the reaction solution to the reactor and then increasing the temperature of the reactor to a predetermined temperature. When the internal temperature of the reactor is above the predetermined temperature even in step (S1), polymerization proceeds in the presence of a polymerization initiator, and the internal temperature of the reactor in step (S1) may be increased to about 60 °C to 120 °C, preferably 70 °C to 110 °C.

According to an embodiment of the present invention, the first reaction solution in step (S1) may include an aromatic vinyl-based monomer, a vinyl cyanide-based monomer, and a first alkyl (meth)acrylate-based monomer. The aromatic vinyl-based monomer may be, for example, one or more selected from the group consisting of styrene, α-methylstyrene, α-ethylstyrene, p-methylstyrene, o-methylstyrene, o-t-butylstyrene, bromostyrene, chlorostyrene, trichlorostyrene, and derivatives thereof, and as a specific example, may be styrene.

The aromatic vinyl-based monomer may be added in amount of 30 parts by weight to 95 parts by weight, 35 parts by weight to 85 parts by weight, 40 parts by weight to 75 parts by weight, or 40 parts by weight to 70 parts by weight, based on 100 parts by weight of the total monomers added, and within this range, a copolymer may be obtained with a high polymerization conversion rate, and the mechanical properties of the copolymer may be maintained, and the aromatic vinyl-based monomer may be a major factor in achieving a matte property, adjust the glass transition temperature, and have excellent compatibility with a thermoplastic resin. Preferably, 10 wt% to 50 wt% of the aromatic vinyl-based monomer based on the total added amount may be added to the first reaction solution in step (S1), and the remaining 50 wt% to 90 wt% may be included in the second reaction solution in step (S2) and added two or more times in a divided manner.

According to an embodiment of the present invention, the vinyl cyanide-based monomer may be one or more selected from the group consisting of acrylonitrile, methacrylonitrile, ethacrylonitrile, and derivatives thereof, and as a specific example, may be acrylonitrile.

According to an embodiment of the present invention, the vinyl cyanide-based monomer may be added in an amount of 5 parts by weight to 70 parts by weight, 10 parts by weight to 60 parts by weight, 15 parts by weight to 50 parts by weight, or 15 parts by weight to 40 parts by weight, based on the total amount of added monomers, and within this range, a copolymer may be obtained with a high polymerization conversion rate, and the mechanical properties of the copolymer may be maintained while having excellent compatibility with a thermoplastic resin. Preferably 10 wt% to 50 wt% of the vinyl cyanide-based monomer based on the total added amount may be added to the first reaction solution in step (S1), and the remaining 50 wt% to 90 wt% may be included in the second reaction solution in step (S2) and added two or more times in a divided manner.

According to an embodiment of the present invention, the first alkyl (meth)acrylate-based monomer may be one or more selected from the group consisting of methyl (meth)acrylate, ethyl (meth)acrylate, propyl (meth)acrylate, butyl (meth)acrylate, 2-ethylhexyl (meth)acrylate, decyl (meth)acrylate, and lauryl (meth)acrylate, and specifically, the alkyl (meth)acrylate monomer may be one or more selected from the group consisting of methyl methacrylate, ethyl methacrylate, butyl methacrylate, methyl acrylate, ethyl acrylate, and butyl acrylate.

According to an embodiment of the present invention, the first alkyl (meth)acrylate-based monomer may be added in an amount of 1 part by weight to 50 parts by weight, 3 parts by weight to 45 parts by weight, 5 parts by weight to 40 parts by weight, or 5 parts by weight to 35 parts by weight, based on the total amount of added monomers, and within this range, a copolymer may be obtained with a high polymerization conversion rate, and as the glass transition temperature is easily adjusted, excellent impact strength and a matte property may be achieved. Preferably 10 wt% to 50 wt% of the first alkyl (meth)acrylate-based monomer based on the total added amount may be added to the first reaction solution in step (S1), and the remaining 50 wt% to 90 wt% may be included in the second reaction solution in step (S2) and added two or more times in a divided manner.

According to an embodiment of the present invention, as described above, a quaternary copolymer may be prepared by further including an additional monomer, and the additional monomer may be a second alkyl (meth)acrylate-based monomer or a vinyl ester-based monomer, and these monomers may be included in the first reaction solution or the second reaction solution, and when added in a divided manner, the added amount of these monomers may be the same as the amount of the monomers described above.

The second alkyl (meth)acrylate-based monomer is a different compound from the above-described first alkyl (meth)acrylate-based monomer but may be selected from the same types of compounds described above, and the vinyl ester-based monomer may be, for example, vinyl acetate, vinyl propionate, vinyl butanoate, vinyl pentanoate, or vinyl hexanoate.

According to an embodiment of the present invention, the second alkyl (meth)acrylate-based monomer or the vinyl ester-based monomer may be added in an amount of 1 part by weight to 40 parts by weight, 5 parts by weight to 35 parts by weight, or 10 parts by weight to 30 parts by weight, based on the total amount of added monomers, and when further added to form a quaternary copolymer, the glass transition temperature and the cross-linking degree may be easily achieved within the desired numerical range, and thus excellent impact strength and matte property may be easily achieved.

According to an embodiment of the present invention, the method of preparing the cross-linked copolymer may be carried out by suspension polymerization, and the first reaction solution in step (S1) is a solvent for carrying out polymerization and may further include one or more additives selected from the group consisting of a polymerization initiator, a water-soluble solvent, a dispersant, a dispersion aid, and a molecular weight regulator and may be carried out in the presence of these additives.

According to an embodiment of the present invention, the polymerization initiator is used to easily initiate polymerization and is not particularly limited as long as the polymerization initiator does not adversely affect polymerization, and may be, for example, one or more selected from the group consisting of 2,5-dimethyl-2,5-di(t-butylperoxy) hexane, di(t-butylperoxy-isopropyl)benzene, t-butyl cumyl peroxide, di-(t-amyl)-peroxide, dicumyl peroxide, butyl 4,4-di(t-butylperoxy)valerate, t-butylperoxybenzoate, 2,2-di(t-butylperoxy)butane, t-amyl peroxy-benzoate, t-butylperoxy-acetate, t-butylperoxy-(2-ethylhexyl)carbonate, t-butylperoxy isopropyl carbonate, t-butyl peroxy-3,5,5-trimethyl-hexanoate, 1,1-di(t-butylperoxy)cyclohexane, t-amyl peroxyacetate, t-amylperoxy-(2-ethylhexyl)carbonate, 1,1-di(t-butylperoxy)-3,5,5-trimethylcyclohexane, 1,1-di(t-amylperoxy)cyclohexane, t-butyl-monoperoxy-malate, 1,1'-azodi(hexahydrobenzonitrile), and 1,1'-azobis(cyclohexane-1-cyclonitrile), and specifically may be one or more selected from the group consisting of dicumyl peroxide, 1,1-di(t-butyl peroxy)cyclohexane, and 1,1'-azobis(cyclohexane carbonitrile).

The polymerization initiator may be used in an amount of 0.001 parts by weight to 0.5 parts by weight, specifically 0.003 parts by weight to 0.45 parts by weight, or 0.06 parts by weight to 0.3 parts by weight, based on 100 parts by weight of the total amount of monomers used in polymerization, and when the polymerization initiator is used within this range, the polymerization reaction may be carried out more easily, and thus the polymerization conversion rate may be increased.

According to an embodiment of the present invention, the water-soluble solvent may be ion-exchanged water or deionized water. Meanwhile, according to an embodiment of the present invention, the monomer droplet may include a water-soluble solvent, and the water-soluble solvent may be ion-exchanged water or deionized water and the same as the water-soluble solvent added before initiating polymerization.

According to an embodiment of the present invention, the dispersant may be one or more selected from the group consisting of water-soluble polyvinyl alcohol, partially saponified polyvinyl alcohol, polyacrylic acid, a copolymer of vinyl acetate and maleic anhydride, hydroxypropyl methylcellulose, gelatin, calcium phosphate, tricalcium phosphate, hydroxyapatite, sorbitan monolaurate, sorbitan trioleate, polyoxyethylene, sodium lauryl sulfate, sodium dodecylbenzenesulfonate and sodium dioctylsulfosuccinate, and may be, as a specific example, tricalcium phosphate.

According to an embodiment of the present invention, the dispersant may be used in an amount of 0.5 parts by weight to 2.0 parts by weight, 0.5 parts by weight to 1.5 parts by weight, or 1.0 part by weight to 1.5 parts by weight, based on 100 parts by weight of the total amount of added monomers, and within this range, a copolymer with more uniform particles may be prepared by increasing the dispersion stability of monomers in the polymerization system.

According to an embodiment of the present invention, the method of preparing the cross-linked copolymer may be carried out by further including a dispersion aid during polymerization, and as a specific example, the dispersion aid may be a polyoxyethylene-based dispersion aid and may be, as a more specific example, polyoxyethylene alkyl ether phosphate with excellent polymerization stability.

According to an embodiment of the present invention, the molecular weight regulator may be, for example, one or more selected from the group consisting of an $\alpha$-methylstyrene dimer, t-dodecyl mercaptan, n-dodecyl mercaptan, octyl mercaptan, carbon tetrachloride, methylene chloride, methylene bromide, tetraethyl thiuram disulfide, dipentamethylene thiuram disulfide, and diisopropylxanthogen disulfide, and as a specific example, may be t-dodecyl mercaptan.

According to an embodiment of the present invention, the molecular weight regulator may be used in an amount of 0.01 parts by weight to 0.40 parts by weight, 0.05 parts by weight to 0.30 parts by weight, or 0.10 to 0.25 parts by weight, based on 100 parts by weight of the total amount of added monomers, and within this range, a copolymer with an appropriate weight-average molecular weight may be prepared.

According to an embodiment of the present invention, the second reaction solution including a cross-linking functional compound in step (S2) may be added two or more times in a divided manner, preferably three or more times. The cross-linking functional compound may include a functional group such as a siloxane group, a vinyl group, or an acrylic group, and two or more functional groups may be present in one cross-linking functional compound.

When polymerization is carried out by adding the cross-linking functional compound (hereinafter referred to as "cross-linking agent") only at the beginning of polymerization, the crosslinking effect may be relatively low. In other words, the concentration of the cross-linking agent at the beginning of polymerization is relatively high, so a side reaction in which the cross-linking agents combine with each other is highly likely to occur, and as the cross-linking agent concentration decreases in the later stage of polymerization, cross-linked parts in copolymer chains may not be uniformly distributed and the yield of cross-linked copolymer may be significantly reduced. This may result in an increase in gloss and light reflection coefficient of variation, and even a decrease in impact strength due to non-uniformity.

According to an embodiment of the present invention, the cross-linking functional compound is added in step (S2) and may be added immediately after step (S1) and added two or more times in a divided manner, preferably three or more times in a divided manner, during polymerization.

According to an embodiment of the present invention, the time interval between the divided additions of the cross-linking functional compound in step (S2) may be 1% to 30% of the total polymerization time. When there are time intervals between the divided additions, the cross-linking degree within the entire copolymer chain may be constant while at an appropriate level and the cross-linking density may be excellent, which may be crucial in making a surface of a resin molded product diffusely reflective. Adding the cross-linking agent in a divided manner may be performed for 20% to 70% of the total polymerization time, and it is preferable to begin and terminate the divided addition within this time range in order to provide a sufficient cross-linking effect.

According to an embodiment of the present invention, the cross-linking functional compound may be added in a divided manner immediately after step (S1), and the addition in a divided manner may be terminated before a polymerization conversion rate is 50% to 75%.

According to an embodiment of the present invention, the cross-linking functional compound added in a divided manner during polymerization in step (S2) may be added in an amount of 0.05 parts by weight to 0.30 parts by weight, preferably 0.05 parts by weight to 0.20 parts by weight, more preferably 0.05 parts by weight to 0.15 parts by weight, based on 100 parts by weight of the total monomers added. When an amount of the added polyene-based cross-linking agent is less than 0.05 parts by weight, a desired level of cross-linking degree may not be achieved due to a lack of cross-linking functional compounds that constitute the crosslinked product, and when an amount of the added cross-linking functional compound exceeds 0.3 parts by weight, an excessively high cross-linking degree may cause an imbalance, and the formation of oligomers due to reactions between cross-linking agents and reactions between cross-linking agents and monomers may adversely affect a matte property. Each amount of the cross-linking functional compound used in the divided additions may be the same or different, and it is preferably to adjust the amount so that the deviation in the amounts is not large, and the added amount may be the total amount added in a divided manner.

As described above, the cross-linking functional compound is a compound having two or more vinyl groups, acrylic groups, or siloxane groups and may be, for example, a silicone-based compound or a polyene-based compound, and the polyene-based compound may be, for example, a vinyl-based compound or an acrylic-based compound, and specifically, one or more selected from the group consisting of divinylbenzene, trivinylbenzene, ethylene glycol di(meth) acrylate, allyl(meth) acrylate, diallyl phthalate, diallyl maleate, triallyl isocyanurate, and trialkyl isocyanurate may be used, and divinylbenzene or allyl methacrylate may be preferably used.

The silicone-based compound may be, for example, 1,3,5-triisopropyl-1,3,5-trivinyl-cyclotrisiloxane, 1,3,5,7-tetraisopropyl-1,3,5,7-tetravinyl-cyclotetrasiloxane, 1,3,5,7,9-pentaisopropyl-1,3,5,7,9-pentavinyl-cyclopentasiloxane, 1,3,5-trisec-butyl-1,3,5-trivinyl-cyclotrisiloxane, 1,3,5,7-tetrasec-butyl-1,3,5,7-tetravinyl-cyclotetrasiloxane, 1,3,5,7,9-pentasec-butyl-1,3,5,7,9-pentavinyl-cyclopentasiloxane, 1,3,5-trimethyl-1,3,5-trivinyl-cyclotrisiloxane, 1,3,5,7-tetramethyl-1,3,5,7-tetravinyl-cyclotetrasiloxane, 1,3,5,7,9-pentamethyl-1,3,5,7,9-pentavinyl-cyclopentasiloxane, 1,3,5-triethyl-1,3,5-trivinyl-cyclotrisiloxane, 1,3,5,7-tetraethyl-1,3,5,7-tetravinyl-cyclotetrasiloxane, 1,3,5,7,9-pentaethyl-1,3,5,7,9-pentavinyl-cyclopentasiloxane, or a mixture thereof, and divinylsilane, trivinylsilane, dimethyldivinylsilane, divinylmethylsilane, methyltrivinylsilane, diphenyldivinylsilane, divinylphenylsilane, trivinylphenylsilane, divinylmethylphenyl silane, tetravinylsilane, dimethylvinyl disiloxane, divinyldiphenylchlorosilane, and the like may be mixed and used, but is not limited thereto.

The silicone-based compound may be preferably 1,3,5-trimethyl-1,3,5-trivinyl-cyclotrisiloxane, 1,3,5,7-tetramethyl-1,3,5,7-tetravinyl-cyclotetrasiloxane, 1,3,5,7,9-pentamethyl-1,3,5,7,9-pentavinyl-cyclopentasiloxane, 1,3,5-triethyl-1,3,5-trivinyl-cyclotrisiloxane, 1,3,5,7-tetraethyl-1,3,5,7-tetravinyl-cyclotetrasiloxane, 1,3,5,7,9-pentaethyl-1,3,5,7,9-pentavinyl-cyclopentasiloxane, or a mixture thereof, and more preferably, 1,3,5,7-tetramethyl-1,3,5,7-tetravinyl-cyclotetrasiloxane and the like may be used.

According to an embodiment of the present invention, the method of preparing the aromatic vinyl-vinyl cyanide-acrylic cross-linked copolymer may include: initiating polymerization by adding a first reaction solution including an aromatic vinyl-based monomer, a vinyl cyanide-based monomer, and an alkyl (meth)acrylate monomer to a reactor (S1); and performing polymerization while adding a second reaction solution including a cross-linking functional compound to the reactor (S2), wherein the second reaction solution may be added two or more times in a divided manner, and the second reaction solution may further include one or more of a molecular weight regulator and a polymerization initiator.

When the second reaction solution including a molecular weight regulator and/or a polymerization initiator is added in a divided manner with a cross-linking functional compound, it is much easier to control the reactivity between monomers and the reactivity between the polymer chain and the cross-linking agent, and thus adjusting the glass transition temperature and the cross-linking degree is much easier, and a smooth and matte molded product with a low gloss and light reflection coefficient of variation may be obtained while maintaining excellent impact strength and heat resistance.

According to an embodiment of the present invention, the cross-linking functional compound is added in a divided manner in step (S2) but may be included in the first reaction solution to initiate polymerization. Adding the cross-linking functional compound to the first reaction solution may not replace the effect of adding the cross-linking functional compound in step (S2), but an additional cross-linking effect may be achieved by adding a cross-linking agent before initiating polymerization.

In the method of preparing the copolymer according to an embodiment of the present invention, polymerization in step (S1) may be performed at a temperature range of 50 °C to 150 °C, preferably 60 °C to 130 °C, more preferably 65 °C to 120 °C. When polymerization is performed within this temperature range, it may be advantageous for obtaining a final polymerization conversion rate, desired particle size characteristics, and other polymer properties.

(2) Aromatic vinyl-vinyl cyanide-based non-crosslinked copolymer

According to an embodiment of the present invention, the resin composition may include an aromatic vinyl-vinyl cyanide-based non-crosslinked copolymer. The aromatic vinyl-vinyl cyanide-based non-crosslinked copolymer may include an aromatic vinyl-based monomer unit and a vinyl cyanide-based monomer unit, and the types of these monomers may be equally selected from the types described for the cross-linked copolymer above.

The non-crosslinked copolymer may serve as a matrix in a resin composition, and the non-crosslinked copolymer has excellent heat resistance, impact resistance, and fluidity and may serve as a basis for realizing excellent physical properties of a resin molded product. The non-crosslinked copolymer may generally be obtained by applying commercially available resins and may be obtained by a commercialized method or the same manner as in the above-described cross-linked copolymer preparation method except that a cross-linking agent is not used but is not particularly limited thereto.

(3) Graft copolymer

According to an embodiment of the present invention, the graft copolymer may include a conjugated diene-based polymer, an aromatic vinyl-based monomer unit, and a vinyl cyanide-based monomer unit or may include an acrylic-based polymer, an aromatic vinyl-based monomer unit, and a vinyl cyanide-based monomer unit. In other words, the graft copolymer may be an acrylonitrile-butadiene-styrene-based copolymer or acrylic-styreneacrylonitrile (ASA) graft copolymer prepared based on an acrylic-based polymer. Hereinafter, the case where the graft copolymer is an acrylonitrile-butadiene-styrene-based copolymer will be described.

The acrylonitrile-butadiene-styrene-based copolymer provides excellent moldability and impact resistance to a thermoplastic resin composition and may be a graft copolymer with a core-shell structure including: a core including a conjugated diene-based monomer unit; and a shell surrounding the core and including an aromatic vinyl-based monomer unit and a vinyl cyanide-based monomer unit.

According to an embodiment of the present invention, the conjugated diene-based monomer of the graft copolymer may be one or more selected from the group consisting of 1,3-butadiene, 2,3-dimethyl-1,3-butadiene, 2-ethyl-1,3-butadiene, 1,3-pentadiene, and isoprene, and as a specific example, may be 1,3-butadiene.

The types of aromatic vinyl-based monomers and vinyl cyanide-based monomers may be equally selected from the types described for the cross-linked copolymer above.

According to an embodiment of the present invention, the acrylonitrile-butadiene-styrene-based copolymer may be prepared through emulsion polymerization and emulsion graft polymerization and may be, for example, prepared by emulsion polymerization of conjugated diene-based monomers to prepare a core (or seed), which is a rubber polymer, and adding a vinyl cyanide-based monomer and an aromatic vinyl-based monomer to the core and performing emulsion graft polymerization.

The acrylonitrile-butadiene-styrene-based copolymer may include: 30 wt% to 70 wt% of a core including a conjugated diene-based monomer-derived unit; and 30 wt% to 70 wt% of a shell surrounding the core and including an aromatic vinyl-based monomer-derived unit and a vinyl cyanide-based monomer-derived unit, wherein the shell may include the aromatic vinyl-based monomer-derived unit and the vinyl cyanide-based monomer-derived unit in a weight ratio of 7:3 to 8:2, and in this case, the copolymer may have excellent impact resistance, mechanical properties, and moldability.

The graft copolymer may be obtained using a commercially available resin and may be obtained by a commercially available method and is not particularly limited thereto.

Others

The resin composition according to an embodiment of the present invention may further include, if necessary, one or more additives selected from the group consisting of an impact modifier, a lubricant, a heat stabilizer, an anti-dripping agent, an antioxidant, a light stabilizer, an ultraviolet ray blocker, a pigment, an inorganic filler, and the additive may be used in an amount of 5.0 parts by weight or less, or 0.1 parts by weight to 1.0 part by weight, based on 100 parts by weight of the copolymer and thermoplastic resin.

In addition, the additive may be used without particular limitation as long as it is used for a thermoplastic resin composition and, for example, the anti-dripping agent may be one or more selected from the group consisting of Teflon, polyamide, polysilicon, polytetrafluoroethylene (PTFE), and a tetrafluoroethylene-hexafluoropropylene (TFE-HFP) copolymer to improve flame retardancy, and the inorganic filler may be one or more selected from the group consisting of barium sulfate, barium glass filler, and barium oxide.

**Molded product**

According to the present invention, a molded product including the above-described resin composition is provided. For example, the molded product may be used in various industrial fields such as electrical and electronic products and automobile components. Commonly used methods including extrusion, injection, and casting may be applied as a molding method, and for example, compared to a product in which a mold surface is corroded to provide a matte molded product, the molded product according to the present invention does not require corrosion treatment of the mold surface, and it is possible to provide a molded product having a matte and smooth surface in an injection-molded state without post-treatment of the molded product.

**Examples**

Hereinafter, examples of the present invention will be described in detail so that those skilled in the art can easily carry out the present invention. However, the present invention may be embodied in several different forms and is not limited to the examples described herein.

**Preparation Example 1**

200 parts by weight of ion-exchanged water, 55 parts by weight of styrene, 30 parts by weight of acrylonitrile, and 15 parts by weight of 2-ethylhexyl acrylate were added to a reactor, and after increasing the temperature of the reactor to 70 °C, 0.2 parts by weight of 1,1'-azobis(cyclohexane-1-carbonitrile), 0.25 parts by weight of t-dodecyl mercaptan, and 0.1 parts by weight of allyl methacrylate were added to the reactor in three portions at 1-hour intervals, and polymerization was performed for 5 hours in total. After washing, dehydration, and drying, a cross-linked copolymer powder was prepared.
Each part by weight is based on 100 parts by weight of the total monomers added.

**Preparation Example 2**

A cross-linked copolymer was prepared in the same manner as in Preparation Example 1, except that 60 parts by weight of styrene and 20 parts by weight of acrylonitrile were added, and 20 parts by weight of ethyl acrylate was added instead of 15 parts by weight of 2-ethylhexyl acrylate, and 0.2 parts by weight of divinylbenzene was added instead of 0.1 parts by weight of allyl methacrylate.

**Preparation Example 3**

A cross-linked copolymer was prepared in the same manner as in Preparation Example 1, except that 45 parts by weight of styrene and 25 parts by weight of acrylonitrile were added, 30 parts by weight of methyl acrylate was added instead of 15 parts by weight of 2-ethylhexyl acrylate, and 0.15 parts by weight of diallyl maleate was added instead of 0.1 parts by weight of allyl methacrylate.

**Preparation Example 4**

A cross-linked copolymer was prepared in the same manner as in Preparation Example 1, except that 55 parts by weight of styrene and 20 parts by weight of acrylonitrile were added, 25 parts by weight of butyl acrylate was added instead of 15 parts by weight of 2-ethylhexyl acrylate, and 0.15 parts by weight of diallyl terephthalate was added instead of 0.1 parts by weight of allyl methacrylate.

**Preparation Example 5**

A cross-linked copolymer was prepared in the same manner as in Preparation Example 1, except that 45 parts by weight of styrene and 25 parts by weight of acrylonitrile were added, and instead of 15 parts by weight of 2-ethylhexyl acrylate, 10 parts by weight of butyl acrylate and 20 parts by weight of butyl methacrylate were added, and 0.2 parts by weight of ethylene glycol dimethacrylate was added instead of 0.1 parts by weight of allyl methacrylate.

**Preparation Example 6**

A cross-linked copolymer was prepared in the same manner as in Preparation Example 1, except that 50 parts by weight of styrene and 20 parts by weight of acrylonitrile were added, and instead of 15 parts by weight of 2-ethylhexyl acrylate, 10 parts by weight of ethyl acrylate and 20 parts by weight of vinyl acetate were added, and 0.2 parts by weight of tetraethylene glycol diacrylate was added instead of 0.1 parts by weight of allyl methacrylate.

**Comparative Preparation Example 1**

A cross-linked copolymer was prepared in the same manner as in Preparation Example 1, except that 75 parts by weight of styrene and 25 parts by weight of acrylonitrile were added instead of 55 parts by weight of styrene, 30 parts by weight of acrylonitrile, and 15 parts by weight of 2-ethylhexyl acrylate, and allyl methacrylate was not added.

**Comparative Preparation Example 2**

A cross-linked copolymer was prepared in the same manner as in Preparation Example 1, except that 60 parts by weight of styrene and 35 parts by weight of acrylonitrile were added instead of 55 parts by weight of styrene, 30 parts by weight of acrylonitrile, and 15 parts by weight of 2-ethylhexyl acrylate, and 2-ethylhexyl acrylate was not added.

**Comparative Preparation Example 3**

A cross-linked copolymer was prepared in the same manner as in Preparation Example 1, except that 60 parts by weight of styrene, 20 parts by weight of acrylonitrile, and 20 parts by weight of ethyl acrylate were added instead of 55 parts by weight of styrene, 30 parts by weight of acrylonitrile, and 15 parts by weight of 2-ethylhexyl acrylate, and 0.02 parts by weight of allyl methacrylate was added.

**Experimental Example 1**

For each copolymer prepared in Preparation Examples 1 to 6 and Comparative Preparation Examples 1 to 3, the glass transition temperature and the cross-linking degree were measured by the following methods and results thereof are shown in Table 1 below.

(1) Glass transition temperature (Tg, °C): After collecting 0.01 g samples from polymers and copolymers, each sample was primarily heated from room temperature (20 °C to 25 °C) to 180 °C using a differential scanning calorimeter (DSC) (from Mettler Toledo) to remove foreign substances, and then each sample was cooled to room temperature (20 °C to 25 °C) and secondarily heated to 180 °C again to measure the glass transition temperature.

(2) Cross-linking degree (%): 0.25 g of the copolymer was dissolved in 25 g of acetone and stirred at room temperature for 24 hours, and after the solution was filtered through a 100-mesh sus filter, the copolymer remaining on the filter was dried at 80 °C for 24 hours and weighed, and the ratio (%) of the measured weight to the initial copolymer weight of 0.25 g was calculated.

[Table 1]

|  | Glass transition temperature (°C) | Cross-linking degree (%) |
|---|---|---|
| Preparation Example 1 | 78 | 50 |
| Preparation Example 2 | 87 | 55 |
| Preparation Example 3 | 86 | 49 |
| Preparation Example 4 | 64 | 43 |
| Preparation Example 5 | 78 | 60 |
| Preparation Example 6 | 81 | 45 |
| Comparative Preparation Example 1 | 119 | 0 |
| Comparative Preparation Example 2 | 107 | 53 |
| Comparative Preparation Example 3 | 85 | 15 |

As shown in Table 1, the cross-linked copolymers of Preparation Example 1 to 6 according to the present invention had a glass transition temperature of less than 90 °C and a cross-linking degree at the level of 40% to 70%. On the other hand, the non-crosslinked copolymer of Comparative Preparation Example 1 had a very high glass transition temperature, and Comparative Preparation Example 2, in which a cross-linking agent was not added in a divided manner, had a similar level of cross-linking degree as that of Examples but had a high glass transition temperature, and Comparative Preparation Example 3, in which a cross-linking agent was added in a small amount, had a low cross-linking degree even though the glass transition temperature was low.

From the results, it is confirmed that it is possible to achieve an appropriate level of glass transition temperature and cross-linking degree through adjusting the amount of added cross-linking agent and using an acrylate-based monomer.

**Examples 1 to 9 and Comparative Examples 1 to 3**

Resin compositions were prepared by mixing 15 parts by weight of the cross-linked copolymers prepared in Preparation Examples 1 to 6 and Comparative Preparation Examples 1 to 3, 58 parts by weight of an aromatic vinyl-vinyl cyanide-based non-crosslinked copolymer (SAN, 83SF commercially available from LG Chem), 27 parts by weight of a graft copolymer (G-ABS, DP270E commercially available from LG Chem), 0.1 parts by weight of a heat stabilizer (IRGANOX 1010 commercially available from BASF SE), and titanium dioxide (Ti-Pure™ R-350 commercially available from The Chemours Company), and the resin compositions were designated Examples 1 to 6 and Comparative Examples 1 to 3, respectively.

A resin composition was prepared by mixing 18 parts by weight of the cross-linked copolymer prepared in Preparation Example 1, 55 parts by weight of an aromatic vinyl-vinyl cyanide-based non-crosslinked copolymer (SAN, 83SF commercially available from LG Chem), 27 parts by weight of a graft copolymer (G-ABS, DP270E commercially available from LG Chem), 0.1 parts by weight of a heat stabilizer (IRGANOX 1010 commercially available from BASF SE), and titanium dioxide (Ti-Pure™ R-350 commercially available from The Chemours Company), and this resin composition was designated Example 7.

A resin composition was prepared by mixing 12 parts by weight of the cross-linked copolymer prepared in Preparation Example 2, 61 parts by weight of an aromatic vinyl-vinyl cyanide-based non-crosslinked copolymer (SAN, 83SF commercially available from LG Chem), 27 parts by weight of a graft copolymer (G-ABS, DP270E commercially available from LG Chem), 0.1 parts by weight of a heat stabilizer (IRGANOX 1010 commercially available from BASF SE), and titanium dioxide (Ti-Pure™ R-350 commercially available from The Chemours Company), and this resin composition was designated Example 8.

A resin composition was prepared by mixing 15 parts by weight of the cross-linked copolymer prepared in Preparation Example 1, 58 parts by weight of an aromatic vinyl-vinyl cyanide-based non-crosslinked copolymer (SAN, 83SF commercially available from LG Chem), 27 parts by weight of a graft copolymer prepared based on an acrylic-based polymer (SA927 commercially available from LG Chem), 0.1 parts by weight of a heat stabilizer (IRGANOX 1010 commercially available from BASF SE), and titanium dioxide (Ti-Pure™ R-350 commercially available from The Chemours Company), and this resin composition was designated Example 9.

**Experimental Example 2**

The resin compositions prepared in Examples 1 to 9 and Comparative Examples 1 to 3 were extruded and injected at 200 °C to prepare a sample, and the gloss, light reflection coefficient of variation, and impact strength of the prepared samples were measured by the following methods, and results thereof are shown in Table 2.

(1) Gloss: A 60° gloss was measured according to ASTM D523 using a gloss meter (VG7000 commercially available from NIPPON DENSHOKU).

(2) Light reflection coefficient of variation: derived using Phyton and the following method

1) Sample imaging: Using a DSLR camera (Canon 750D) and a 200 mm x 200 mm white LED (Collimated Backlight LTS-3PFT), a prepared sample is photographed and imaged when a distance between the camera and the sample is set to 40 cm, and a distance between the sample and the light is set to 100 cm, and an angle is 90°.

2) Grayscale conversion of sample image: The sample image is converted to grayscale (0 to 255) using the OpenCV library. A grayscale value is assigned to each pixel in the sample image, and the grayscale value is used as luminous intensity.

3) Reconstruction of the image: The image is reconstructed by dividing the image into grids of 200 $\mu$m x 200 $\mu$m and averaging luminous intensity values (grayscale values) of the pixels in each grid. Each grid has one averaged luminous intensity value.

4) Luminous intensity correction: The target grid is set as Zone 1, the 8 grids adjacent to Zone 1 are set as Zone 2, and the 16 grids adjacent to Zone 2 are set as Zone 3, and after assigning 1, -0.0625, and -0.03125 to Zone 1, Zone 2, and Zone 3, respectively, as a correction factor, the corrected luminous intensity value of the target grid is derived using Equation 2 below.

[Equation 2]

$$L = 2L^1 + \sum_{k=1}^{8} (-0.0625\, L_k^2) + \sum_{m=1}^{16} (-0.03125 L_m^3)$$

In Equation 2, L is the corrected luminous intensity value of the target grid, $L^1$ is the luminous intensity of the grid in Zone 1, $L_1^2, L_2^2, L_3^2, ..., L_8^2$ are the respective luminous intensities of the 8 grids in Zone 2, and $L_1^3, L_2^3, L_3^3, ..., L_{16}^3$ are the respective luminous intensities of the 16 grids in Zone 3.

5) Average value and standard deviation: After obtaining the average and standard deviation from the corrected luminous intensity values of each grid, the light reflection coefficient of variation is derived by substituting the average value and standard deviation of the luminous intensity into Equation 1.

$$[\text{Equation 1}]$$

$$C_{LR} = D_L/M_L$$

$C_{LR}$ is a light reflection coefficient of variation, $D_L$ is a standard deviation of luminous intensity, and $M_L$ is an average luminous intensity.

(3) Impact strength (kgf·cm/cm): Notched Izod impact strength was measured according to ASTM D256 by notching a 1/4-inch-thick sample at room temperature (23 °C).

[Table 2]

|  | Gloss | Light reflection coefficient of variation | Impact strength |
|---|---|---|---|
| Example 1 | 16 | 1.02 | 25 |
| Example 2 | 12 | 1.08 | 17 |
| Example 3 | 18 | 1.21 | 18 |
| Example 4 | 24 | 1.38 | 21 |
| Example 5 | 11 | 1.17 | 20 |
| Example 6 | 21 | 1.27 | 23 |
| Example 7 | 13 | 1.11 | 22 |
| Example 8 | 14 | 1.06 | 19 |
| Example 9 | 18 | 1.35 | 26 |
| Comparative Example 1 | 95 | 0.30 | 25 |
| Comparative Example 2 | 14 | 1.05 | 13 |
| Comparative Example 3 | 73 | 1.64 | 20 |

Referring to Table 2, it can be seen that copolymers of Examples 1 to 6, in which a cross-linked copolymer prepared by the preparation method according to an embodiment of the present invention was applied, were matte and had excellent surface smoothness and excellent impact strength. However, in the case of Comparative Example 1, in which a non-crosslinked copolymer was applied, the surface smoothness was excellent compared to other Comparative Examples, but the gloss was confirmed to be at a high gloss level rather than matte. Comparative Example 2 had a high glass transition temperature because an acrylate-based monomer was not included, and as this cross-linked copolymer was applied, the impact strength was confirmed to be low in all parts, and Comparative Example 3 appeared to have a high gloss due to low cross-linking degree, and it was confirmed that surface smoothness was not good.

**Claims**

1. A resin composition comprising an aromatic vinyl-vinyl cyanide-acrylic cross-linked copolymer,

wherein a 60° gloss measured according to ASTM D523 using a gloss meter is 25 or less, an impact strength of a 1/4-inch-thick sample measured according to ASTM D256 is 15 kgf·cm/cm or more, and a light reflection coefficient of variation calculated by Equation 1 below is 1.5 or less:

$$[\text{Equation 1}]$$

$$C_{LR} = D_L/M_L$$

where $C_{LR}$ is a light reflection coefficient of variation, $D_L$ is a standard deviation of luminous intensity, and $M_L$ is an average luminous intensity.

2. The resin composition of claim 1, wherein the aromatic vinyl-vinyl cyanide-acrylic cross-linked copolymer is included in an amount of 1 to 30 parts by weight based on 100 parts by weight of the resin composition.

3. The resin composition of claim 1, wherein the aromatic vinyl-vinyl cyanide-acrylic cross-linked copolymer is included in an amount of 3 to 20 parts by weight based on 100 parts by weight of the resin composition.

4. The resin composition of claim 1, wherein the gloss is 24 or less.

5. The resin composition of claim 1, wherein the light reflection coefficient of variation is 1.4 or less.

6. The resin composition of claim 1, wherein the cross-linked copolymer includes: a cross-linking part including a cross-linking functional compound unit; an aromatic vinyl-based monomer unit; a vinyl cyanide-based monomer unit; and a first alkyl (meth)acrylate-based monomer unit.

7. The resin composition of claim 6, wherein the cross-linked copolymer further includes a vinyl ester-based monomer unit or a second alkyl (meth)acrylate-based monomer unit.

8. The resin composition of claim 6, wherein the cross-linking functional compound is one or more selected from the group consisting of a silicone-based compound and a polyene-based compound.

9. The resin composition of claim 1, further comprising one or more copolymers of an aromatic vinyl-vinyl cyanide-based non-crosslinked copolymer and a graft copolymer.

10. The resin composition of claim 9, wherein the aromatic vinyl-vinyl cyanide-based non-crosslinked copolymer includes an aromatic vinyl-based monomer unit and a vinyl cyanide-based monomer unit, and the graft copolymer includes a conjugated diene-based polymer, an aromatic vinyl-based monomer unit, and a vinyl cyanide-based monomer unit.

11. A molded product comprising the resin composition of claim 1.

## INTERNATIONAL SEARCH REPORT

| International application No. |
|---|
| **PCT/KR2023/016674** |

### A. CLASSIFICATION OF SUBJECT MATTER

**C08L 25/12**(2006.01)i; **C08L 51/04**(2006.01)i; **C08L 25/08**(2006.01)i; **C08L 33/06**(2006.01)i; **C08L 55/02**(2006.01)i

According to International Patent Classification (IPC) or to both national classification and IPC

### B. FIELDS SEARCHED

Minimum documentation searched (classification system followed by classification symbols)

C08L 25/12(2006.01); C08F 212/10(2006.01); C08F 257/02(2006.01); C08F 265/04(2006.01); C08F 283/12(2006.01); C08F 285/00(2006.01); C08J 5/00(2006.01); C08K 5/06(2006.01); C08K 5/09(2006.01); C08L 23/06(2006.01); C08L 51/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 방향족비닐-비닐시안-아크릴계 가교 공중합체(aromatic vinyl-vinyl cyan-acrylic cross-linked copolymer), 광택도(gloss), 충격강도(impact strength), 광반사 변동계수(light reflection coefficient of variation), 가교 관능성 화합물(cross-linked functional compound)

### C. DOCUMENTS CONSIDERED TO BE RELEVANT

| Category* | Citation of document, with indication, where appropriate, of the relevant passages | Relevant to claim No. |
|---|---|---|
| Y | KR 10-2016-0040375 A (SAMSUNG SDI CO., LTD.) 14 April 2016 (2016-04-14)<br>See claims 1-13; and paragraphs [0036]-[0122]. | 1-11 |
| Y | KR 10-0401312 B1 (CHEIL INDUSTRIES INC.) 10 October 2003 (2003-10-10)<br>See claims 1 and 2; and paragraphs [0016]-[0020]. | 1-11 |
| Y | KR 10-2015-0026404 A (CHEIL INDUSTRIES INC.) 11 March 2015 (2015-03-11)<br>See claim 1; and paragraph [0052]. | 7 |
| A | KR 10-2020-0017161 A (LG CHEM, LTD.) 18 February 2020 (2020-02-18)<br>See entire document. | 1-11 |
| A | KR 10-2016-0127397 A (LG CHEM, LTD.) 04 November 2016 (2016-11-04)<br>See entire document. | 1-11 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 February 2024** | **05 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/016674**

### C.    DOCUMENTS CONSIDERED TO BE RELEVANT

| Category* | Citation of document, with indication, where appropriate, of the relevant passages | Relevant to claim No. |
|---|---|---|
| A | US 5075363 A (TSUDA, Y. et al.) 24 December 1991 (1991-12-24)<br>    See entire document. | 1-11 |

Form PCT/ISA/210 (second sheet) (July 2022)

**INTERNATIONAL SEARCH REPORT**
Information on patent family members

International application No.

**PCT/KR2023/016674**

| Patent document cited in search report | | | Publication date (day/month/year) | Patent family member(s) | | | Publication date (day/month/year) |
|---|---|---|---|---|---|---|---|
| KR | 10-2016-0040375 | A | 14 April 2016 | KR | 10-1726480 | B1 | 13 April 2017 |
| | | | | US | 2016-0096954 | A1 | 07 April 2016 |
| | | | | US | 9796841 | B2 | 24 October 2017 |
| KR | 10-0401312 | B1 | 10 October 2003 | KR | 10-2002-0048605 | A | 24 June 2002 |
| KR | 10-2015-0026404 | A | 11 March 2015 | KR | 10-1666701 | B1 | 17 October 2016 |
| KR | 10-2020-0017161 | A | 18 February 2020 | CN | 111542555 | A | 14 August 2020 |
| | | | | CN | 111542555 | B | 02 May 2023 |
| | | | | EP | 3708599 | A1 | 16 September 2020 |
| | | | | EP | 3708599 | A4 | 07 April 2021 |
| | | | | JP | 2021-505725 | A | 18 February 2021 |
| | | | | JP | 7055475 | B2 | 18 April 2022 |
| | | | | KR | 10-2207173 | B1 | 25 January 2021 |
| | | | | TW | 202017956 | A | 16 May 2020 |
| | | | | TW | I815944 | B | 21 September 2023 |
| | | | | US | 11326050 | B2 | 10 May 2022 |
| | | | | US | 2021-0002472 | A1 | 07 January 2021 |
| | | | | WO | 2020-032505 | A1 | 13 February 2020 |
| KR | 10-2016-0127397 | A | 04 November 2016 | KR | 10-1791736 | B1 | 30 October 2017 |
| US | 5075363 | A | 24 December 1991 | EP | 0315490 | A2 | 10 May 1989 |
| | | | | EP | 0315490 | A3 | 12 June 1991 |
| | | | | EP | 0315490 | B1 | 30 March 1994 |
| | | | | EP | 0315490 | B2 | 13 October 1999 |
| | | | | JP | 01-121350 | A | 15 May 1989 |
| | | | | JP | 07-047676 | B2 | 24 May 1995 |
| | | | | KR | 10-1989-0008242 | A | 10 July 1989 |
| | | | | KR | 10-1997-0001715 | B1 | 14 February 1997 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20220139506
- KR 20220138522

- US 4460742 A